# EUROPÄISCHE PATENTSCHRIFT

(11) **EP 2 936 655 B1**
(45) Veröffentlichungstag und Bekanntmachung des Hinweises auf die Patenterteilung: **24.05.2017**
(21) Anmeldenummer: 13805887.0
(22) Anmeldetag: 17.12.2013
(51) Int. Cl.: H02K 3/52, H02K 3/38, H02K 9/22, H02K 1/20

(54) **STATOR GEPRESST MIT WICKELKOPFSUPPORT**
STATOR PRESSED WITH WINDING HEAD SUPPORT
STATOR EMBOUTI POURVU D'UN SUPPORT DE TETE DE BOBINE

(30) Priorität: 20.12.2012 DE 102012223976
(43) Veröffentlichungstag der Anmeldung: 28.10.2015
(73) Patentinhaber: Hilti Aktiengesellschaft, 9494 Schaan (LI)
(72) Erfinder: MAHLER, Thomas, 18299 Laage (DE)
(86) Internationale Anmeldenummer: PCT/EP2013/076798
(87) Internationale Veröffentlichungsnummer: WO 2014/095780

(56) Entgegenhaltungen:
- EP-A1- 2 228 481
- WO-A1-2009/029743
- DE-A1-102010 063 304
- DE-C- 596 337

## Beschreibung

Die Erfindung betrifft einen Stator für eine elektrodynamische Maschine, insbesondere einen Elektromotor. Der Stator enthält dazu ein Statorpaket mit einem ersten Statorende und einem zweiten Statorende. Des Weiteren enthält das Statorpaket wenigstens eine Stegisolation mit zumindest einem Wickelstützelement zur Aufnahme einer Statorspule.
Üblicherweise besteht ein Stator bzw. Ständer für einen Elektromotor unter anderem aus einem Statorpaket. Das Statorpaket wird hierzu aus einzelnen Blechringen gebildet. Dazu verfügt das Statorpaket über eine Anzahl an Statorpolen bzw. Stege, welche sich radial in das Innere des Statorpakets erstrecken. Zwischen den einzelnen Statorpolen befinden sich dabei Zwischenräume in Form von Pol- bzw. Wicklungsnuten.
Gewöhnlich wird die Innenfläche des Statorpakets, die Statorpole (Stege) sowie die Polnuten mit einem Kunststoff umspritzt bzw. ummantelt. Alternativ können die Polnuten auch mit Papier isoliert werden. Bei dem Kunststoff kann es sich beispielsweise um Polymere, wie z.B. Duroplast oder Thermoplast, handeln. Die Kunststoff-Umspritzung formt dabei jeweils um die einzelnen Statorpole die eigentlichen Wickelstützen, welche zur Aufnahme der Statorspulen dienen.
Ein derartiger Stator ist aus der EP-Patentschrift 2 015 426 bekannt. Dieses Dokument zum Stand der Technik offenbart einen Stator für eine Antriebsvorrichtung eines Handwerkzeugs, wie z.B. einen Akkuschrauber. Der Stator weist hierbei zwei axiale Statorenden auf, an denen jeweils ein Anschlusselement, beispielsweise ein Lagerschild oder ein Deckel, angeordnet ist. Darüber hinaus besitzt der Stator in seinem Inneren mehrere, sich radial nach innen erstreckenden Stegen, die über die gesamte Länge des Stator verlaufen und welche durch Wicklungsnuten unterteilt sind. Um die Stege herum ist eine Statorwicklung bzw. Statorspule angebracht. Zwischen den Stegen und der Statorwicklung ist eine Nutisolation vorgesehen.

Die DE 10 2010 063 304 A1 offenbart einen Stator mit einem Befestigungselement aus Metall.

Auf Grund des hohen Drahtzugs, welcher beim Wickeln der Statorspulen notwendig ist, kann es zu einer Verformung der Wickelstützen an den Enden des Statorpakets kommen. Darüber hinaus kann es auch zu einem Abbrechen der Wickelstützen in Folge des hohen Drahtzuges kommen.

Um den Anforderungen des Wickelprozesses, insbesondere den Anforderungen des hohen Drahtzugs, zu genügen, werden gegenwärtig nur thermoplastische Werkstoffe mit einem hohen Elastizitätsmodul (E-Modul) zur Herstellung der Wickelstützen eingesetzt. Bei der Verwendung von thermoplastischen Werkstoffen kann es jedoch aufgrund des hohen Drahtzuges der Wickelung zu relativ starken Verformungen an den Wickelstützen kommen. Höhergefüllte Kunststoffe weisen zwar für den Einsatz als Wickelstützen eine höhere Steifigkeit auf, jedoch kommt es auch bei diesen Werkstoffen schließlich zu Brüchen bei der Wickelstützen unter der Belastung des Drahtzuges.

Darüber hinaus stellt auch die Wärmeleitfähigkeit der für die Wickelstützen üblicherweise verwendeten Werkstoffe ein Problem dar. Die in den Statorspulen durch den Wechselstrom erzeugte Wärme (induktive Erwärmung) muss beispielsweise über die Wickelstützen an die Aussenfläche des Statorpakets geleitet werden, um einer Überhitzung innerhalb des Statorpakets entgegenzuwirken. Kunststoffe mit einer optimierten Wärmeleitfähigkeit genügen dabei häufig nicht den Anforderungen des Wickelprozesses, da diese ebenfalls durch die hohen Drahtzüge verformt werden oder sogar brechen. Die mehr oder minder nur zur Verfügung stehenden thermoplastischen Werkstoffe, welche über eine optimierte Wärmeleitfähigkeit verfügen, weisen ebenfalls Einschränkungen hinsichtlich der Fließweglänge und der davon abhängigen (notwendigen) Mindestwandstärken auf. Um diesen Einschränkungen entgegenzuwirken, werden oftmals größere Wandstärken in der Wickelstützen eingeführt, welches jedoch wiederum zu einem schlechten Wärmeabtransport von den Statorspulen über den Thermoplast auf das Statorpaket führt.

Eine Aufgabe der vorliegenden Erfindung besteht darin, die vorstehend genannten Probleme zu lösen und damit einen Stator bereitzustellen, welche den Anforderungen des Wickelprozesses, insbesondere des hohen Drahtzugs, genügt und gleichzeitig eine bessere Wärmeabfuhr für den Stator gewährleistet.

Die Aufgabe wird erfindungsgemäss durch einen Stator für eine elektrodynamische Maschine, insbesondere Elektromotor gelöst. Der Stator enthält dazu ein Statorpaket mit einem ersten Statorende und einem zweiten Statorende. Des Weiteren enthält das Statorpaket wenigstens eine Stegisolation mit zumindest einem Wickelstützelement zur Aufnahme einer Statorspule. Erfindungsgemäss ist eine wärmeleitfähige Abstützvorrichtung mit wenigstens einem Abstützelement vorgesehen, wobei das Abstützelement wenigstens teilweise in dem Wickelstützelement angeordnet ist.

Entsprechend einer alternativen Ausgestaltungsform der vorliegenden Erfindung kann die wärmeleitfähige Abstützvorrichtung auch für die Verwendung in einer als Aussenläufer konzipierten elektrodynamischen Maschine, insbesondere Elektromotor, ausgestaltet sein.

Gemäss einer vorteilhaften Ausgestaltung der vorliegenden Erfindung kann vorgesehen sein, dass jedes Abstützelement einen ersten Abschnitt sowie einen zweiten Abschnitt enthält, wobei sich der erste Abschnitt im Wesentlichen in einer ersten Ebene erstreckt und sich der zweite Abschnitt im Wesentlichen in einer weiteren Ebene rechtwinkelig zu der ersten Ebene sowie in Richtung eines Statorendes erstreckt.
Durch die rechtwinklig zueinander stehenden Abschnitte des Abstützelements ist eine Abstützung der Wickelstützelemente sowohl in radialer als auch in axialer Ausrichtung gegen die auftretenden Kräfte des Drahtzugs der Wickelung gewährleistet.

Um zu verhindern, dass der erste Anschnitt und der zweite Abschnitt des Abstützelements relativ zueinander verbogen werden, kann ein Versteifungselement zwischen dem ersten Abschnitt und dem zweiten Abschnitt vorgesehen sein. Das Versteifungselement kann dabei in Form von zusätzlich aufgebrachtem Material zwischen dem ersten und zweiten Abschnitt ausgestaltet sein. Darüber hinaus kann das Versteifungselement auch als entsprechende Versteifungsrippe oder -vertiefung ausgestaltet sein.

Entsprechend einer weiteren alternativen Ausgestaltung kann jedes Abstützelement in Form einer gebogenen Kontur ausgestaltet sein, wobei sich jeweils ein freies Ende des Abstützelementes in Richtung des entsprechenden Statorendes erstreckt. Durch diese besondere Ausgestaltungsform des Abstützelements kann eine Stresskonzentration in der Schnittstelle zwischen dem ersten und zweiten Abschnitt effektiv vermieden werden.

Eine weitere vorteilhafte Ausgestaltungsform der vorliegenden Erfindung kann darin bestehen, dass die wärmeleitfähige Abstützvorrichtung wenigstens eine Abstützvorrichtungskomponente enthalten kann, wobei jede Abstützvorrichtungskomponente zumindest ein Abstützelement enthält. Hierdurch besteht die Abstützvorrichtung nicht ausschliesslich nur aus einem einzigen Bestandteil (bzw. Komponente), sondern kann beispielsweise aus einer Vielzahl an einzelnen Komponenten, wie z.B. Ringabschnitten oder Sektoren, zusammengesetzt sein. Durch die Gestaltung der Abstützvorrichtung in Form von mehreren Abstützvorrichtungskomponenten ergeben sich Vorteile hinsichtlich der Herstellung des erfindungsgemässen Stators. Insbesondere kann hierdurch eine individuelle Anpassung bzw. Ausrichtung der Abstützelemente in den Wickelstützelementen vorgenommen werden.

Bevorzugter Weise kann die wärmeleitfähige Abstützvorrichtung im Wesentlichen als ein ringförmiges Blechelement ausgestaltet sein. Hierdurch kann die wärmeleitfähige Abstützvorrichtung an die Kontur des Querschnitts des Statorpakets angepasst werden.

Es ist jedoch auch möglich, die wärmeleitfähige Abstützvorrichtung als vieleckiges bzw. polygonales Blechelement zu verwirklichen.

Darüber hinaus ist es auch möglich, dass die wärmeleitfähige Abstützvorrichtung als Rahmen-, Skelett- oder Tragwerkkonstruktion zu verwirklichen. Des Weiteren ist es auch möglich, die wärmeleitfähige Abstützvorrichtung als Platte mit einer entsprechenden Öffnung für den Innenraum des Statorpakets zu gestalten. Wie bereits vorstehend beschrieben, ist es generell möglich, dass die wärmeleitfähige Abstützvorrichtung aus mehreren einzelnen oder miteinander verbundenen Komponenten verwirklicht ist.

Ausserdem ist es weiterhin möglich, dass die wärmeleitfähige Abstützvorrichtung in ihren Dimensionen über die äussere Kontur des Statorpakets hinausragt, um beispielsweise einen Fixierpunkt für den Stator zum dem Gehäuse eines Elektromotors zur Verfügung zu stellen.

Ferner ist es möglich, dass die wärmeleitfähige Abstützvorrichtung aus einer Vielzahl an unterschiedlichen wärmeleitfähigen Werkstoffen, wie z.B. Legierungen oder Verbundwerkstoffen besteht.

In einer weiteren Ausführungsform der vorliegenden Erfindung kann das Blechelement als Stanz- und Biegeteil gestaltet sein. Es ist jedoch auch möglich, jedes andere geeignete Fertigungsverfahren zu verwenden.

Vorteilhafterweise kann die wärmeleitfähige Abstützvorrichtung im Wesentlichen in der Nähe eines Statorendes positioniert sein. Die durch die Wickelung auftretenden Kräfte sind an den axialen Enden der Wickelstützelemente, d.h. in der Nähe des ersten Statorendes, für gewöhnlich am grössten. Die Positionierung der wärmeleitfähigen Abstützvorrichtung in diesem Bereich ist daher am effektivsten. Darüber hinaus ist es ebenfalls möglich zusätzlich zu einer ersten wärmeleitfähigen Abstützvorrichtung oder aber anstelle einer ersten wärmeleitfähigen Abstützvorrichtung eine zweite wärmeleitfähige Abstützvorrichtung in der Nähe des anderen Statorendes zu positionieren.

Um die Abstützvorrichtung besonders widerstandsfähig gegenüber den Kräften des Drahtzuges der Wickelung zu gestalten, d.h. gegenüber besonders hohen Drahtzugkräften, kann die wärmeleitfähige Abstützvorrichtung aus einem höherfesten Werkstoff besteht.

Alternativ ist es auch möglich, dass die Abstützvorrichtung nicht als ein einzelnes separates Bauteil verwirklicht ist. Der erfindungsgemässe Stator kann auch durch ein Herstellungsverfahren mit mehreren Aufspritz- bzw. Auftragungsschritten erzeugt werden. Hierzu wird zunächst eine Schicht wärmeleitfähiger Kunststoff oder Verbundwerkstoff an die Innenseite des Statorpakets aufgespritzt bzw. aufgetragen. In einem nächsten Verfahrensschritt wird eine Schicht höherfester Kunststoff oder Verbundwerkstoff aufgespritzt bzw. aufgetragen, welche die Funktion der Abstützvorrichtung erfüllt. Nachfolgend wird eine dritte Schicht aufgespritzt bzw. aufgetragen, die wiederum aus einem wärmeleitfähigen Kunststoff oder Verbundwerkstoff besteht.

Wahlweise dazu kann der erfindungsgemässe Stator auch dadurch hergestellt werden, indem die Abstützvorrichtung als separates Bauteil auf die Stirnseite des Statorpakets angebracht wird. Nachfolgend wird die Stegisolation in Form eines wärmeleitfähigen und/oder höherfesten Kunststoffs bzw. Verbundwerkstoffs wenigstens teilweise über die Abstützvorrichtung aufgespritzt bzw. aufgetragen.

Gemäss einem weiteren alternativen Herstellungsverfahren für den erfindungsgemässen Stator kann die Abstützvorrichtung in Form eines höherfesten Kunststoffs bzw. Verbundwerkstoffs auf die Stirnseite des Statorpakets aufgespritzt bzw. aufgetragen werden. Die nachfolgend anzubringende Stegisolation ist hierbei als vorgefertigtes separates Bauteil ausgestaltet, welches auf die Abstützvorrichtung sowie die Stirnseite des Statorpakets aufgesteckt werden kann. Die Abstützvorrichtung und/oder die Stirnseite des Statorpakets weist hierzu eine entsprechende Aufnahmevorrichtung auf.

Entsprechend einem weiteren möglichen Herstellungsverfahren für den erfindungsgemässen Stator ist die Stegisolation als ein vorgefertigtes separates Bauteil ausgestaltet, welches bereits eine entsprechende Abstützvorrichtung als wenigstens teilweise integrierte Komponente aufweist. Die Stegisolation kann zusammen mit der integrierten Abstützvorrichtung als Modul auf die Stirnseite des Statorpakets aufgesteckt werden. Die Stirnseite des Statorpakets weist hierzu erneut eine entsprechende Aufnahmevorrichtung auf.

Weitere Vorteile ergeben sich aus der folgenden Zeichnungsbeschreibung. In der Zeichnung ist ein Ausführungsbeispiel der vorliegenden Erfindung dargestellt. Die Zeichnung, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine perspektivische Ansicht eines erfindungsgemässen Stators mit einem Statorpaket sowie einer wärmeleitfähige Abstützvorrichtung;
- Fig. 2: eine Vorderansicht des erfindungsgemässen Stators mit dem Statorpaket sowie der wärmeleitfähige Abstützvorrichtung;
- Fig. 3: eine Schnittansicht entlang der Linie A - A der Fig. 2;
- Fig. 4: eine Vorderansicht der wärmeleitfähige Abstützvorrichtung gemäss einer ersten Ausgestaltung;

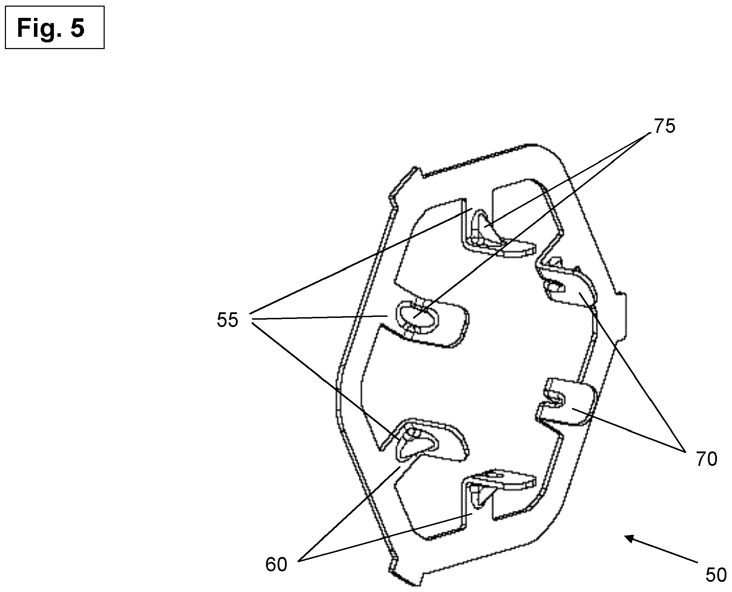

- Fig. 5: eine perspektivische Ansicht der wärmeleitfähige Abstützvorrichtung gemäss einer ersten Ausgestaltung;

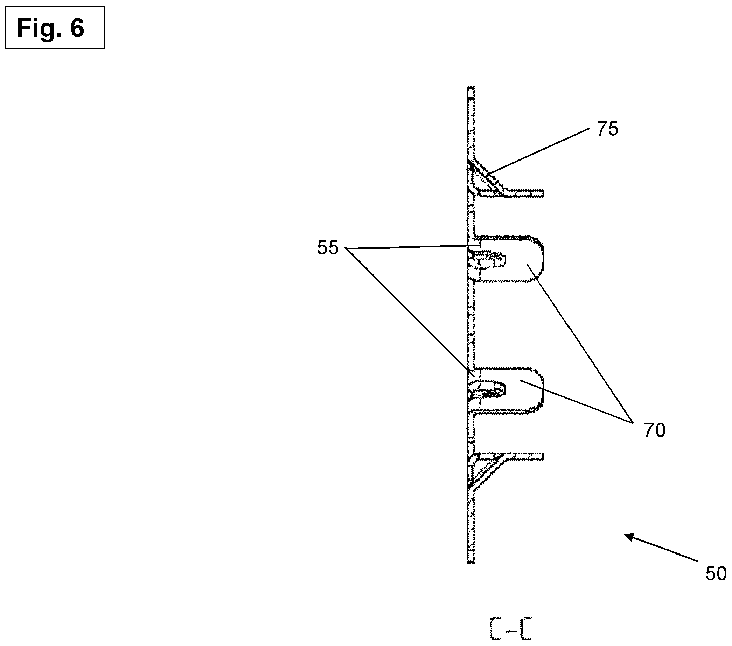

- Fig. 6: eine Schnittansicht entlang der Linie C - C der Fig. 4;
- Fig. 7: eine Seitenansicht der wärmeleitfähige Abstützvorrichtung gemäss einer ersten Ausgestaltung;
- Fig. 8: eine Vorderansicht der wärmeleitfähige Abstützvorrichtung gemäss einer zweiten Ausgestaltung;
- Fig. 9: eine perspektivische Ansicht der wärmeleitfähige Abstützvorrichtung gemäss einer zweiten Ausgestaltung;
- Fig. 10: eine Vorderansicht der wärmeleitfähige Abstützvorrichtung gemäss einer dritten Ausgestaltung;
- Fig. 11: eine Vorderansicht der wärmeleitfähige Abstützvorrichtung gemäss einer vierten Ausgestaltung;
- Fig. 12: eine Vorderansicht der wärmeleitfähige Abstützvorrichtung gemäss einer fünften Ausgestaltung;
- Fig. 13: eine perspektivische Ansicht eines erfindungsgemässen Stators mit einem Statorpaket sowie einer Stegisolation;
- Fig. 14: eine Vorderansicht eines erfindungsgemässen Stators mit einem Statorpaket sowie einer Stegisolation;
- Fig. 15: eine Schnittansicht entlang der Linie A - A der Fig. 14 mit einer Detailansicht der Anordnung der Abstützvorrichtung in der Stegisolation; und
- Fig. 16: eine perspektivische Ansicht des erfindungsgemässen Stators mit der Stegisolation sowie einer Detailansicht der Anordnung der Abstützvorrichtung in der Stegisolation.

### Ausführungsbeispiel der vorliegenden Erfindung

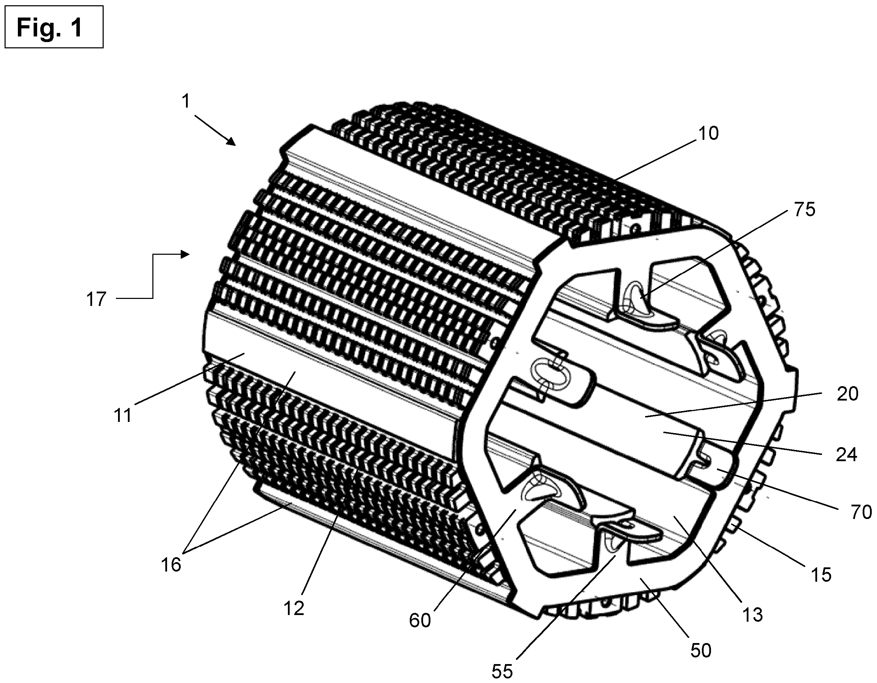

Fig. 1 zeigt einen Stator 1 für eine elektrodynamische Maschine, insbesondere für einen Elektromotor.

Der Stator 1 besteht im Wesentlichen aus einem Statorpaket 10, einer Stegisolation 30 und einer wärmeleitfähigen Abstützvorrichtung 50.

Das Statorpaket 10 setzt sich aus mehreren einzelnen Blechringen 12 zusammen, welche miteinander fest verbunden sind, wodurch dem Stator 1 sowie dem Statorpaket 10 eine im Wesentlichen zylindrische Form gegeben wird. Des Weiteren weist das Statorpaket 10 eine Aussenfläche 11, eine Innenfläche 13 sowie einem ersten Statorende 15 und einem zweiten Statorende 17 auf.

Die einzelnen Blechringe 12 weisen eine sechseckige Form auf, wobei die jeweiligen Ecken 16 an der Innen- und Aussenseite des Blechringes 12 abgerundet sind.
Die Blechringe 12 enthalten ausserdem sechs Stegelemente 20, welche gleichmässig verteilen an der Innenseite der Blechringe 12 angeordnet sind und sich radial zum Inneren des Blechringes 12 erstrecken. Wenn die einzelnen Blechringe 12 zu dem Statorpaket 10 verbunden sind, bilden die einzelnen Stegelemente 20 zusammen sechs durchgehende Stege 24, welche sich entlang der Innenfläche 13 des Statorpakets 10 über dessen gesamte Länge des Statorpakets 10 erstrecken.
Durch die sechseckige Form der Blechringe 12 erhält das Statorpaket 10 die Form eines zylindrischen sechseckigen Rohrs mit einer zentralen Durchgangsöffnung 25.

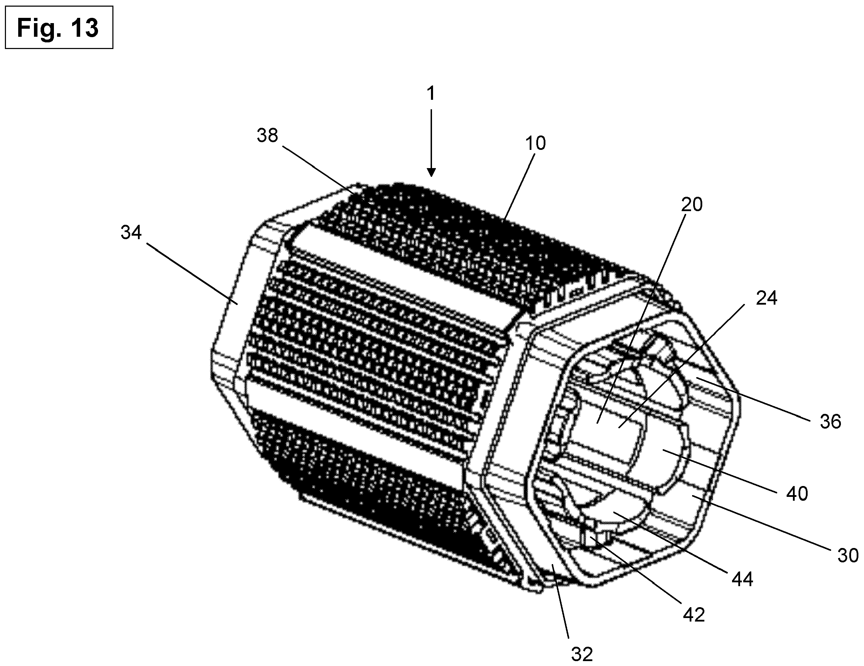

Wie die Fig. 13 zeigt, ist die Stegisolation 30 ebenfalls in Form eines zylindrischen sechseckigen Rohrs mit einem ersten Ende 32, einem zweiten Ende 34, einer Innenfläche 36 und einer Aussenfläche 38. An der Innenfläche 38 weist die Stegisolation 30 sechs gleichmässig verteilte Wickelstützelemente 40 auf, welche sich radial zu dem Inneren der Stegisolation 30 erstrecken. Die Wickelstützelemente 40 umschliessen die Stege 24 des Statorpakets 10 und weisen einen länglichen Grundkörper 42 mit Trägerplatte 44 auf. Jedes Wickelstützelement 40 wird jeweils mit einem nicht gezeigten Draht (z.B. Kupferdraht) zu einer Statorspule 10 umwickelt. Der nicht gezeigte Draht wird dabei mehrmals um den länglichen Grundkörper 42 und unterhalb der Trägerplatte 44 des Wickelstützelementes 40 gewickelt.

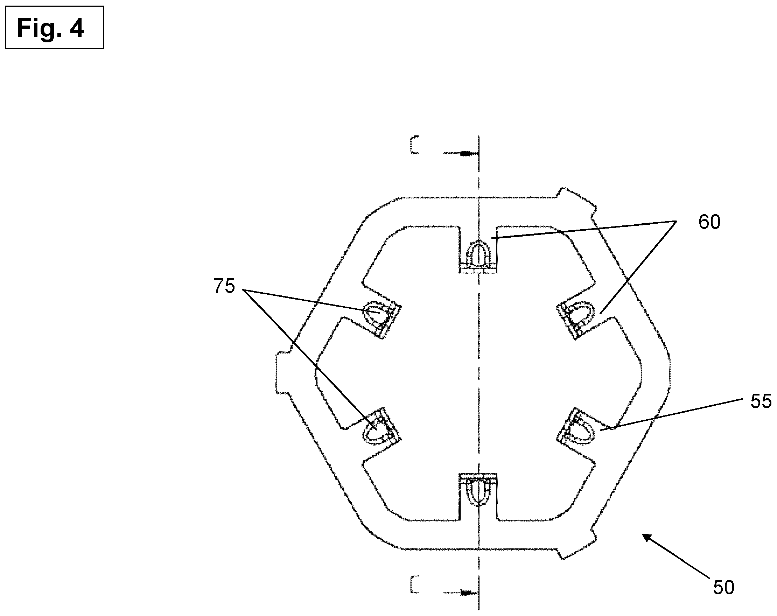

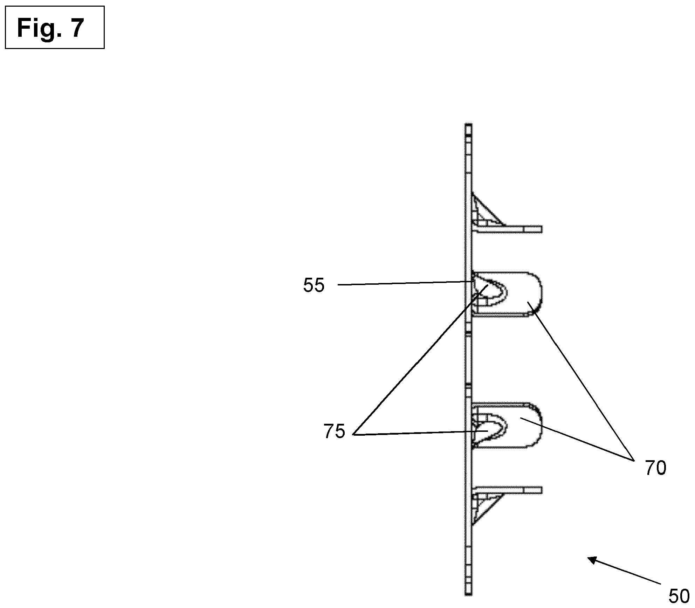

Wie in Fig. 4 und Fig. 7 gezeigt, ist die wärmeleitfähige Abstützvorrichtung 50 als ein separates Blechelement ausgebildet.

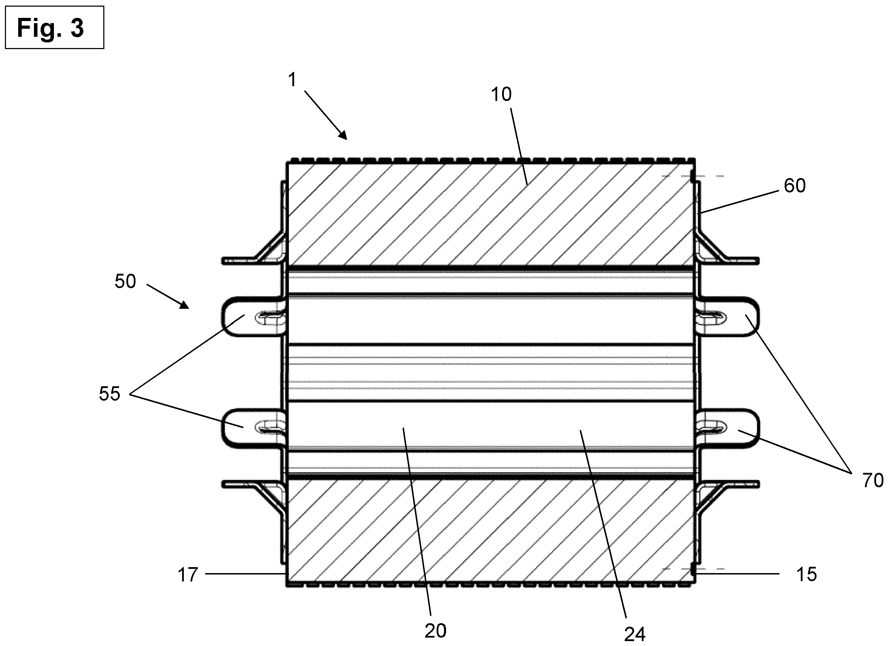

Gemäss einer ersten Ausgestaltungsform der wärmeleitfähige Abstützvorrichtung 50, wie in Fig. 4 gezeigt, ist die Abstützvorrichtung 50 in Form eines durchgängigen sechseckigen Rings 51 mit einer Innenseite 52 und einer Aussenseite 54 ausgebildet. Die jeweiligen Ecken des Rings 51 sind dabei sowohl an der Innenseite 52 als auch an der Aussenseite 54 abgerundet. Die wärmeleitfähige Abstützvorrichtung 50 enthält wiederum sechs einzelne Abstützelemente 55, welche gleichmässig verteilt zwischen den Ecken an der Innenseite 52 der wärmeleitfähigen Abstützvorrichtung 50 angeordnet sind und sich radial zum Inneren der wärmeleitfähigen Abstützvorrichtung 50 erstrecken. Die Abstützelemente 55 bestehen wiederum aus einem ersten Abschnitt 60 und einem zweiten Abschnitt 70. Der erste Abschnitt 60 erstreckt sich dabei in derselben Ebene wie der Ring 51 der wärmeleitfähigen Abstützvorrichtung 50. Der zweite Abschnitt 70 verläuft in einem rechten Winkel zu dem ersten Abschnitt 60 und weist dabei in Richtung des ersten Stirnendes 16 des Statorpakets 10, vgl. Fig. 1 und 3. Zwischen dem ersten Abschnitt 60 und dem zweiten Abschnitt 70 sind Versteifungselemente 75, welche in Form einer Versteifungsvertiefung ausgestaltet sind, positioniert, um ein relatives Verbiegen des ersten Abschnitts 60 zu dem zweiten Abschnitt 70 zu verhindern.

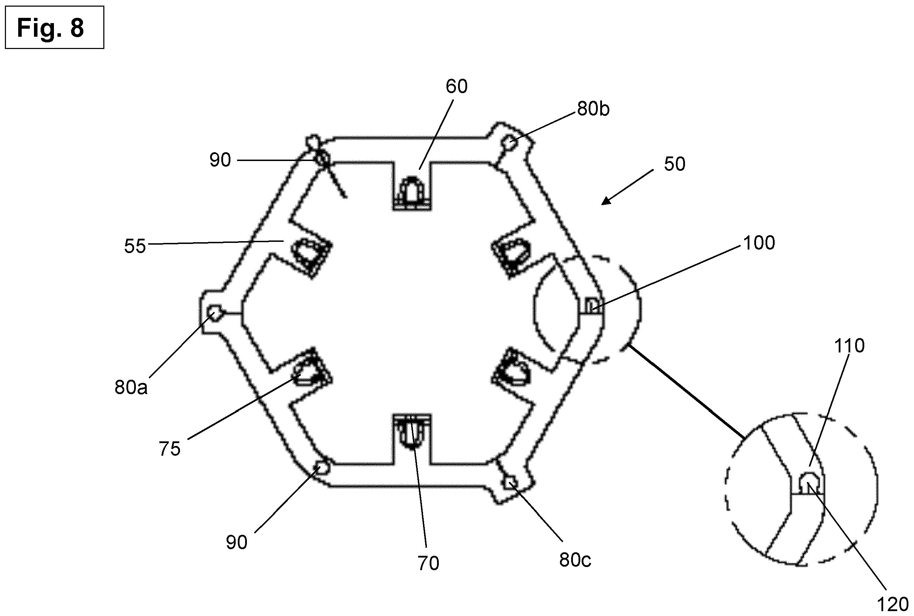

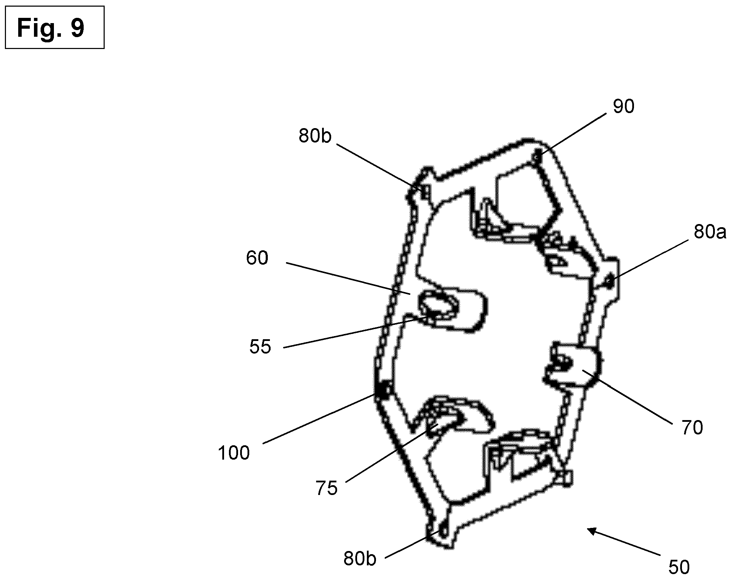

Fig. 8 und 9 zeigt eine zweite Ausgestaltungsform der wärmeleitfähigen Abstützvorrichtung 50, bei der das Blechelement ähnlich der ersten Ausgestaltungsform der wärmeleitfähigen Abstützvorrichtung 50 ausgestaltet ist. Die zweite Ausgestaltungsform der wärmeleitfähigen Abstützvorrichtung 50 weist ebenfalls sechs Abstützelemente 55 mit jeweils einem ersten Abschnitt 60 und einem zweiten Abschnitt 70 auf. Zusätzlich weist die zweite Ausgestaltungsform der wärmeleitfähigen Abstützvorrichtung 50 drei Biegepunkte 80a, 80b, 80c, zwei Aussparungen 90 sowie eine Verschlussvorrichtung 100 auf. Die Verschlussvorrichtung 100 enthält ein Aufnahmeelement 110 und ein Einfügeelement 120. Das Einfügeelement 120 ist dabei so ausgestaltet, dass es in das Aufnahmeelement 110 aufgenommen werden kann und von diesem gehalten werden kann.

Zur Herstellung der zweiten Ausgestaltungsform der wärmeleitfähigen Abstützvorrichtung 50 befindet sich die Abstützvorrichtung 50 zunächst in einem geraden, nicht verschlossenen Zustand. Um aus dieser Abstützvorrichtung 50 einen geschlossenen sechseckigen Ring zu erzeugen, wird die Abstützvorrichtung 50 um den Biegepunkt 80 so verformt bzw. gebogen, dass das Einfügeelement 120 in das Aufnahmeelement 110 aufgenommen und von diesem gehalten wird. Die Abstützvorrichtung 50 ist damit verschlossen und dadurch zu einem sechseckigen Ring geformt. Die Aussparungen 90 helfen bei der Verformung des Blechrings 12 zu einem sechseckigen Ring. Die Abstützelemente 55 mit dem ersten Abschnitt 60 und zweiten Abschnitt 70 können vor oder nach dem Verformen des Blechrings 12 zu einem sechseckigen Ring gebildet werden.

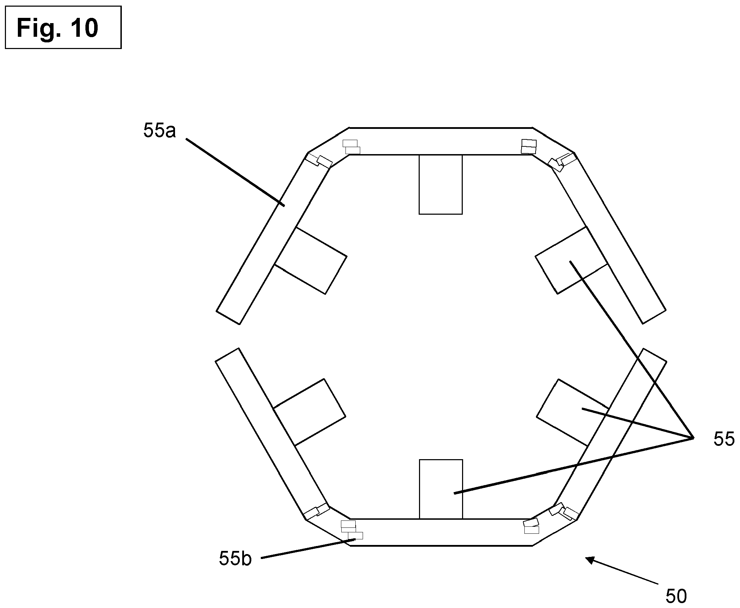

Fig. 10, Fig. 11 und Fig. 12 zeigt jeweils eine weitere Ausgestaltungsform der wärmeleitfähigen Abstützvorrichtung 50 für einen erfindungsgemässen Stator 1.

Dabei zeigt Fig. 10 eine dritte Ausgestaltungsform der wärmeleitfähige Abstützvorrichtung 50, welche aus zwei einzelnen Abstützvorrichtungskomponenten 50a, 50b, in Form von Blechelementen, besteht. Jedes einzelne der zwei Blechelemente 50a, 50b enthält dabei ein Abstützelement 55.

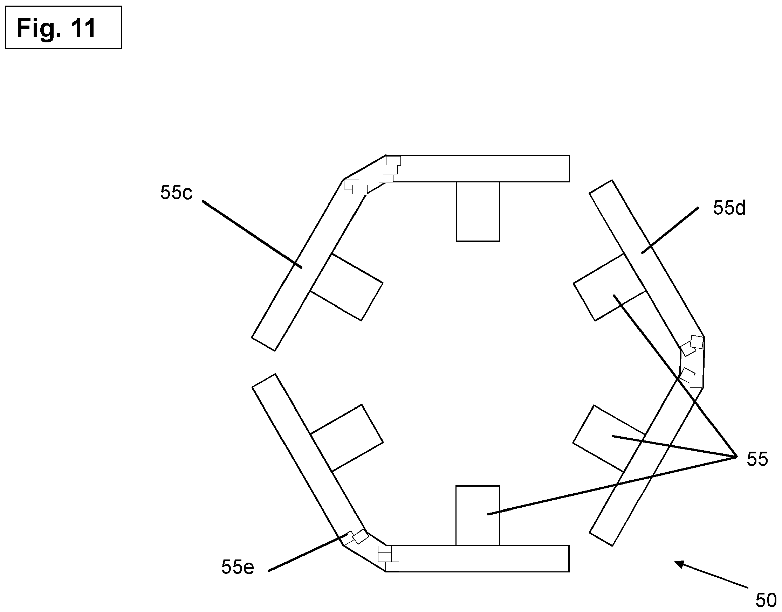

Fig. 11 offenbart eine vierte Ausgestaltungsform wärmeleitfähige Abstützvorrichtung 50, welche aus drei einzelnen Abstützvorrichtungskomponenten 50c, 50d, 50e, in Form von Blechelementen, mit jeweils zwei Abstützelementen 55 besteht.

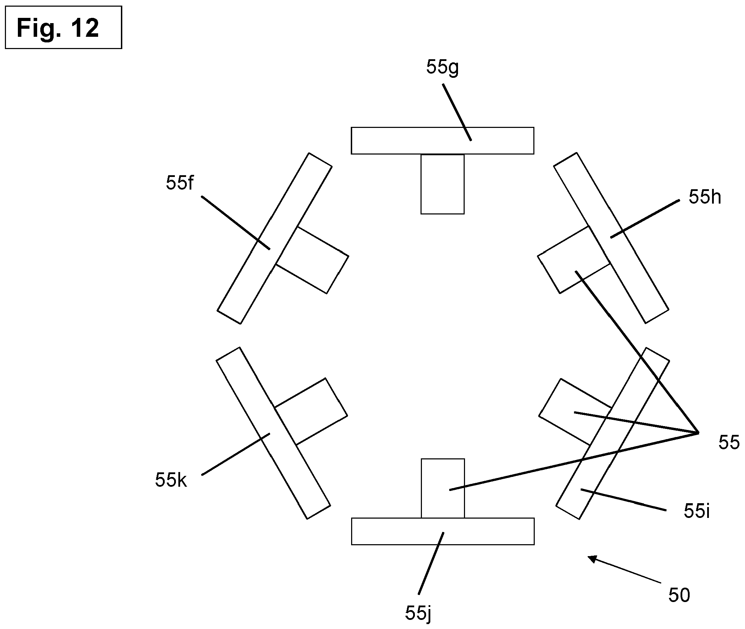

Des Weiteren zeigt Fig. 12 eine fünfte Ausgestaltungsform wärmeleitfähige Abstützvorrichtung 50, welche aus sechs einzelnen Abstützvorrichtungskomponenten 50f, 50g, 50h, 50i, 50j, 50k, in Form von Blechelementen, besteht, die wiederum jeweils sechs Abstützelemente 55 umfassen.

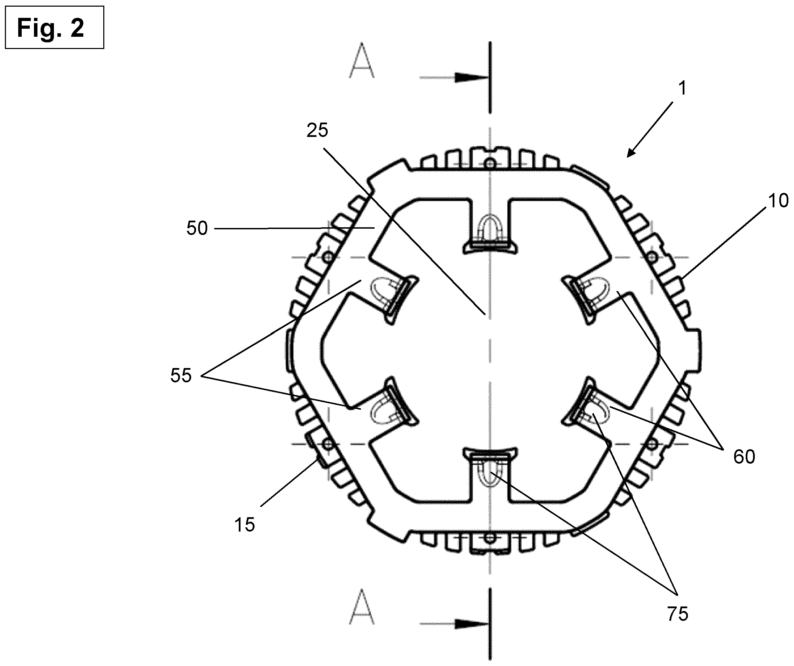

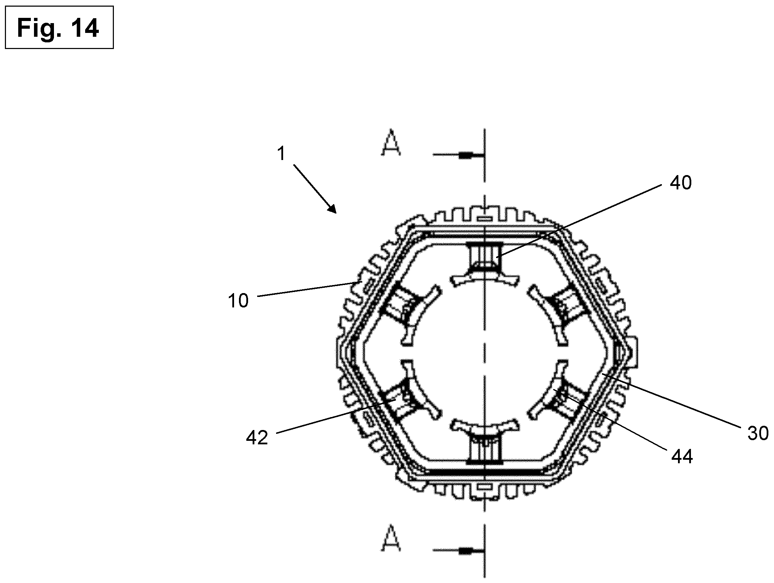

Entsprechend der Fig. 13 bis 16 ist die wärmeleitfähige Abstützvorrichtung 50 teilweise integraler Bestandteil der Stegisolation 30. Die wärmeleitfähige Abstützvorrichtung 50 ist hierzu so an dem ersten Statorende 15 des Statorpakets 10 positioniert (vgl. Fig. 1 bis Fig. 3), dass der erste Abschnitt 60 der sechs Abstützelemente 55 der Abstützvorrichtung 50 an der Stirnseite der Stege 24 des Statorpakets 10 anliegt. Der zweite Abschnitt 70 der sechs Abstützelemente 55 erstreckt sich in Richtung des ersten Statorendes 15 des Statorpakets 10.

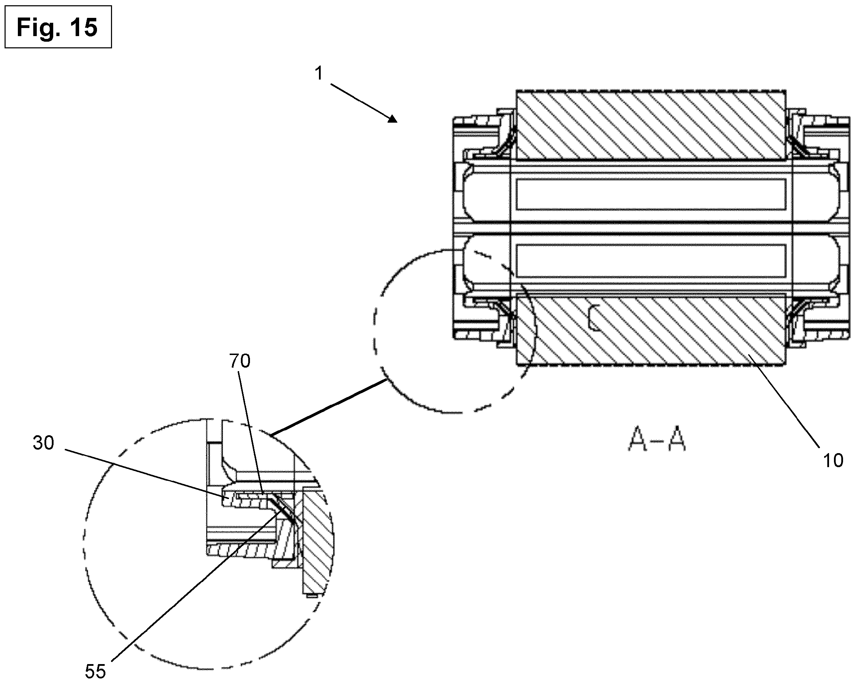

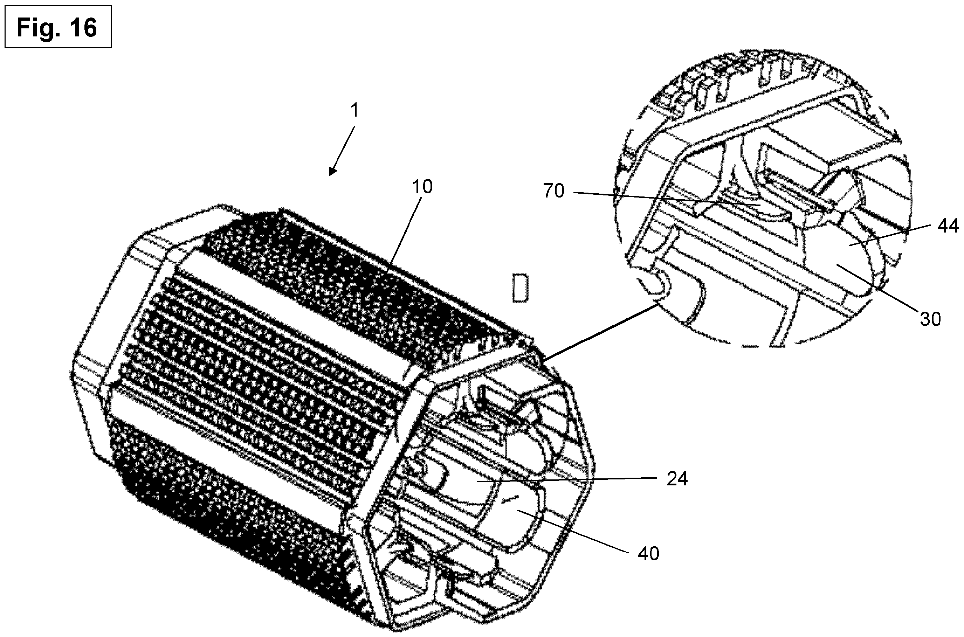

Die Stegisolation 30 besteht aus einem Kunststoff (alternative kann auch ein anderer geeigneter Werkstoff oder auch eine Kombination von unterschiedlichen Werkstoffen verwendet werden) und wird um die Innenfläche 13 des Statorpakets 10 gespritzt bzw. aufgetragen. Dabei bedeckt die Stegisolation 30 die gesamte Innenfläche 13 des Statorpakets 10. Die Enden 32, 34 der Stegisolation 30 ragen dabei über die Statorenden 15, 17 des Statorpakets 10 hinaus. Wie bereits vorstehend beschrieben und in Fig. 13 gezeigt, umschliesst jede der sechs Wickelstützelemente 40 der Stegisolation 30 jeweils einen der Stege 24 des Statorpakets 10. Um jede der sechs Wickelstützelemente 40 wird jeweils ein nicht gezeigter Draht für eine Spulenwicklung gewickelt. Der erste Abschnitt 60 der sechs Abstützelemente 55 der Abstützvorrichtung 50 befindet sich damit zwischen der Stirnseite der Stege 24 des Statorpakets 10 und den Wickelstützelementen 40 der Stegisolation 30, vgl. Fig. 15 und 16. Hierdurch stützt der erste Abschnitt 60 der Abstützelemente 55 die Wickelstützelemente 40 der Stegisolation 30 gegen die axial wirkenden Kräfte, welche durch den Drahtzug der Wicklung erzeugt werden. Der sechseckige Ring der Abstützvorrichtung 50 liegt dabei an dem Statorende 15, 17 des Statorpakets 10 an.

Der zweite Abschnitt 70 der Abstützelemente 55 ist in das vordere Ende (d.h. welches sich in Richtung des ersten Statorendes 15 des Statorpakets 10 befindet) der Trägerplatte 44 der Wickelstützelemente 40 integriert, um hierdurch die Enden dieser Trägerplatte 44 gegen die radial wirkenden Kräfte des Drahtzuges der Wicklung zu stützen, vgl. Fig. 15 bis 18.

Neben der Stützfunktion der Abstützvorrichtung 50 gegen die Kräfte des Drahtzuges der Wicklung, erfüllt die Abstützvorrichtung 50 auch noch eine Wärmeleitfunktion. Die in der (nicht gezeigten) Statorspule erzeugte Wärme wird über die ersten Abschnitte 60 und zweiten Abschnitte 70 der Abstützelemente 55 an den sechseckigen Ring der Abstützvorrichtung 50 geleitet. Da, wie bereits vorstehend beschrieben, der sechseckige Ring der Abstützvorrichtung 50 an den Statorenden 15, 17 des Statorpakets 10 anliegt, kann die erzeugte Wärme an die Aussenfläche 11 des Statorpakets 10 abgeben werden, um hierdurch die Temperatur in der Statorspule zu reduzieren und mögliche Schäden zu vermeiden.

## Patentansprüche

1. Stator (1) für eine elektrodynamische Maschine, insbesondere Elektromotor, enthaltend:
- ein Statorpaket (10) mit einem ersten Statorende (15) und einem zweiten Statorende, (17) und
- eine Stegisolation (30) mit zumindest einem Wickelstützelement (40) zur Aufnahme einer Statorspule,
wobei eine wärmeleitfähige Abstützvorrichtung (50) mit wenigstens einem Abstützelement (55) vorgesehen ist, wobei das Abstützelement (55) wenigstens teilweise in dem Wickelstützelement (40) angeordnet ist, und wobei die Abstützvorrichtung (50) an einem Statorende (15, 17) positioniert wird, **dadurch gekennzeichnet, dass** jedes Abstützelement (55) einen ersten Abschnitt (60) sowie einen zweiten Abschnitt (70) enthält, wobei sich der erste Abschnitt (60) im Wesentlichen in einer ersten Ebene erstreckt und sich der zweite Abschnitt (70) im Wesentlichen in einer weiteren Ebene rechtwinkelig zu der ersten Ebene sowie in Richtung eines Statorendes (15, 17) erstreckt, so dass die in der Statorspule erzeugte Wärme über die ersten Abschnitte (60) und zweiten Abschnitte (70) der Abstützelemente (55) an die Außenfläche (11) des Statorpakets (10) abgegeben wird.

2. Stator (1) nach Anspruch 1,
**dadurch gekennzeichnet, dass** ein Versteifungselement (75) zwischen dem ersten Abschnitt (60) und dem zweiten Abschnitt (70) vorgesehen ist.

## Claims

1. Stator (1) for an electrodynamic machine, in particular an electric motor, containing:
- a stator assembly (10) with a first stator end (15) and a second stator end (17) and
- web insulation (30) with at least one winding support element (40) for receiving a stator coil,
wherein a thermally conductive support device (50) is provided with at least one support element (55), the support element (55) is arranged at least partly in the winding support element (40) and the support device (50) is positioned at a stator end (15, 17),
**characterised in that** each support element (55) contains a first section (60) and a second section (70), the first section (60) extending substantially in a first plane and the second section (70) extending substantially in a further plane perpendicular to the first plane and in the direction of a stator end (15, 17) so that the heat generated in the stator coil is dissipated to the outer surface (11) of the stator assembly (10) via the first sections (60) and second sections (70) of the support elements (55).

2. Stator (1) according to claim 1, **characterised in that** a stiffening element (75) is provided between the first section (60) and the second section (70).

## Revendications

1. Stator (1) pour une machine électrodynamique, en particulier un moteur électrique, contenant :
- un corps de stator (10) ayant une première extrémité de stator (15) et une seconde extrémité de stator (17), et
- un isolant de lame (30) comportant au moins un élément de support d'enroulement (40) pour recevoir une bobine de stator,
dans lequel est prévu un dispositif de support conducteur de chaleur (50) ayant au moins un élément de support (55), dans lequel l'élément de support (55) est au moins partiellement agencé dans l'élément de support d'enroulement (40), et dans lequel le dispositif de support (50) est positionné sur une extrémité de stator (15, 17),
**caractérisé en ce que** chaque élément de support (55) contient une première partie (60) et une seconde partie (70), dans lequel la première partie (60) s'étend sensiblement dans un premier plan et la seconde partie (70) s'étend sensiblement dans un autre plan perpendiculaire au premier plan ainsi que dans la direction d'une extrémité de stator (15, 17), de sorte que la chaleur générée dans la bobine de stator est transférée vers la surface extérieure (11) du corps de stator (10) par l'intermédiaire de la première partie (60) et de la seconde partie (70) des éléments de support (55).

2. Stator (1) selon la revendication 1, **caractérisé en ce qu'**un élément de renfort (75) est prévu entre la première partie (60) et la seconde partie (70).
